**Europäisches Patentamt**

**European Patent Office**

**Office européen des brevets**

(19)

(11) Veröffentlichungsnummer : **0 014 973**
**B1**

(12)  # EUROPÄISCHE PATENTSCHRIFT

(45) Veröffentlichungstag der Patentschrift :
28.04.82

(21) Anmeldenummer : 80100773.3

(22) Anmeldetag : 14.02.80

(51) Int. Cl.³ : **B 23 B 31/00**, B 32 B 31/20,
B 05 D 1/16

(54) **Verfahren zur Herstellung eines Formteils.**

(30) Priorität : 22.02.79 DE 2906938

(43) Veröffentlichungstag der Anmeldung :
03.09.80 (Patentblatt 80/18)

(45) Bekanntmachung des Hinweises auf die Patenterteilung : 28.04.82 Patentblatt 82/17

(84) Benannte Vertragsstaaten :
**AT BE CH DE FR GB IT LU NL SE**

(56) Entgegenhaltungen :
DE - A - 1 959 277
DE - A - 2 255 454
DE - A - 2 328 299
DE - A - 2 650 628
FR - A - 1 574 279
GB - A - 1 130 891
US - A - 2 494 848

(73) Patentinhaber : **Alkor GmbH Kunststoffverkauf**
**Morgensternstrasse 9 Postfach 71 0109**
**D-8000 München 71 (DE)**

(72) Erfinder : **Landler, Josef**
**Schiessstädtstrasse 84**
**D-8190 Wolfratshausen (DE)**
Erfinder : **Mayr, Max**
**Frank-Caro-Strasse 63**
**D-8261 Hart/Alz. (DE)**

(74) Vertreter : **Weickmann, Heinrich, Dipl.-Ing Patentan-**
**wälte Dipl.Ing.H.Welckmann et al**
**Dipl.Phys.Dr.K.Fincke Dipl.Ing.F.A.Weickmann**
**Dipl.Chem.B.Huber, Dr.-Ing.H.Liska Möhlstrasse 22**
**D-8000 München 86 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Imprimerie Jouve, 18, rue St-Denis, 75001 Paris, France

## Verfahren zur Herstellung eines Formteils

Die Erfindung betrifft ein Verfahren zur Herstellung eines Formteils, bestehend aus einem nach vorheriger Erwärmung verformten Trägerteil aus einem mit Füllmaterial versetzten thermoplastischen Bindemittel und einer aus einem flexiblen Bahnzuschnitt gebildeten Veredelungsschicht, wobei zur Herstellung der Haftung zwischen dem Trägerteil und der Veredelungsschicht eine an dem Trägerteil verankerte Faserschicht und zwischen dieser Faserschicht und dem flexiblen Bahnzuschnitt ein Kleber verwendet werden.

Ein solches Verfahren ist aus der DE-A 26 50 628 bekannt. Bei dem bekannten Verfahren nach der DE-A 26 50 628 wird auf die Trägerplatte ein Faservlies durch gemeinsames Warmverpressen aufgebracht. Auf das Faservlies wird ein Haftvermittler aufgetragen. Zur Herstellung eines Formteils wird die Trägerplatte zusammen mit dem Faservlies verformt, worauf das Aufbringen der thermoplastischen Kunststoffolie mittels des Haftvermittlers vorgenommen wird. Die zur Anwendung kommenden Faservliese besitzen ein Flächengewicht von 20 bis 40 g/m².

Versuche haben gezeigt, daß bei diesem Verfahren sich zwischen dem Bahnzuschnitt und der Trägerplatte Lufteinschlüsse bilden, die am fertigen Produkt in Form von Blasen erscheinen und das fertige Produkt damit zum Ausschuß machen. Besonders unangenehm an diesen Blasen ist, daß sie häufig erst bei Wärmelagerung oder im Gebrauch in Erscheinung treten, so daß eine Vermeidung der Blasen am fertig konfektionierten Produkt, z.B. in einem Kraftfahrzeug, auch nicht durch sorgfältige Qualitätskontrolle in dem Herstellerbetrieb der Formteile erreicht werden kann.

Der Erfindung liegt die Aufgabe zugrunde, die Blasenbildung zu vermeiden, insbesondere auch dann, wenn unter für die Blasenbildung besonders förderlichen Voraussetzungen gearbeitet wird, indem nämlich ein Bahnzuschnitt und ein Plattenzuschnitt zwischen einem Unterwerkzeug und einem Oberwerkzeug gleichzeitig vereinigt und verformt werden.

Zur Lösung dieser Aufgabe wird vorgeschlagen, daß man die flexible Bahn unter Verwendung eines Flockklebers elektrostatisch beflockt, wobei der Flockkleber nur so weit erhärtet wird, daß die Verformbarkeit des flexiblen Bahnzuschnitts erhalten bleibt und daß man den so beflockten Bahnzuschnitt mit der Flockseite auf einen durch Erhitzung verformbar gemachten, den Trägerteil ergebenden Plattenzuschnitt auflegt und die beiden Zuschnitte zwischen einem Unterwerkzeug und einem Oberwerkzeug durch Pressen vereinigt und gleichzeitig räumlich verformt, wobei die Flockhöhe und Flockdichte so gewählt werden, daß beim Pressen ein Luftausgleich zwischen den Zuschnitten erfolgen kann.

Aus den deutschen Offenlegungsschriften 23 28 299 und 22 55 454 ist es bekannt, Schichtwerkstoffe dadurch herzustellen, daß zwischen mit elektrostatischem Flock versehenen Außenlagen ein Kunststoff aufgeschäumt wird, der beim Aufschäumen zwischen die Flockfasern eindringt und eine Verankerungswirkung ergibt. Dieses bekannte Verfahren ist dem anmeldungsgemäßen Verfahren gattungsfremd, insbesondere insofern, als die Gefahr eines Lufteinschlusses, der zur Blasenbildung führen könnte, hier nicht besteht.

Aus der US-A-2 494 848 ist es bekannt, eine PVC-Folie mit von der Fläche abstehenden Flockfasern zu versehen, die mittels eines Klebers auf der PVC-Folie fixiert werden und diese PVC-Folie sodann mit der Flockseite auf einen bereits vorgeformten Träger aufzutapezieren, wobei der Träger ebenfalls mit einem Kleber beschichtet wird, in welchen die Flockfasern eindringen, um sich darin zu verankern. Von diesem bekannten Verfahren unterscheidet sich das anmeldungsgemäße Verfahren zum einen dadurch, daß die Vereinigung und die Verformung des Trägers beim anmeldungsgemäßen Verfahren in einem Arbeitsschritt zwischen einem Unterwerkzeug und einem Oberwerkzeug durchgeführt werden und zum anderen dadurch, daß auf das Problem des Luftausgleichs besonders geachtet wird, auf welches die US-A 2 494 848 überhaupt nicht eingeht.

Aus der DE-B-12 57 412 ist es bekannt, eine harte Kunststoffolie und eine weiche Kunststoffolie gemeinsam durch Vakuumziehen zu einem Hohlkörper zu verformen ; dabei wird zur Vermeidung von Lufteinschlüssen der Zwischenraum zwischen den aufeinander gelegten Folienzuschnitten vor dem Vakuumziehvorgang evakuiert.

Aus der DE-A-22 59 862 ist es bekannt, Polyäthylen-Schaumstoffzuschnitte und Polypropylen-Plattenzuschnitte nach vorheriger Vorwärmung in einer Pressform unter geringem Druck zu einem Verbundformteil zu verpressen und der Verbundplatte durch entsprechende Form der Presse zugleich die endgültige Form, z.B. eines Autohimmels mitzuteilen.

Schließlich ist es aus der DE-A-27 04 529 bekannt, einen Wellpappzuschnitt, einen Dämmschichtzuschnitt aus porösem Material und einen Kunststoffolienzuschnitt mit dem Dämmschichtzuschnitt als Mittelschicht und mit Klebmittelauftrag sowohl zwischen der Wellpappschicht und der Dämmschicht, als auch zwischen der Dämmschicht und der Deckschicht aus thermoplastischem Kunststoff in einer Warmpresse mit gegeneinander bewegbarer Patrize und Matrize zu vereinigen und zu verformen.

Das Problem der gut haftenden Befestigung einer flexiblen Bahn auf einer formsteifen Trägerplatte aus einem mit Füllmaterial versetzten thermoplastischen Bindemittel stellt sich besonders bei der Veredelung von sogenannten POHM-Platten, das sind Platten, die als Bindemittel Polyäthylen oder Polypropylen und als Füllmittel Holzmehl enthalten. Diese Platten haben sich wegen ihrer guten Verformbarkeit, ihrer guten Standfestigkeit und ihrer Wohlfeilheit als geeignete Grundlage für die Herstellung von Automobilauskleidungsteilen, beispielsweise Türverkleidungsteilen, erwiesen. Die Oberfläche dieser POHM-Platten bedarf allerdings in einem weiten Anwendungsbereich einer besonderen Behandlung, um den Anforderungen hinsichtlich des Aussehens und der Anfühleigenschaften gerecht zu werden. Trotz Versuchen mit anderen Arten der Oberflächenbehandlung hat sich das Aufbringen von Dekorbahnmaterial auf die POHM-Platte als die am meisten befriedigende Art der Oberflächenbehandlung erwiesen. Dabei nimmt die Beschichtung der POHM-Platten mit thermoplastischen Bahnen eine hervorragende Stelle ein.

Das Problem der Verbindung des Veredelungsbahnmaterials mit den POHM-Platten ist bisher aber nicht in voll befriedigender Weise gelöst worden.

Man hat schon versucht, thermoplastisches Folienmaterial, insbesondere das wegen seiner guten Prägungs- und Bedruckungseigenschaften besonders erwünschte PVC auf POHM-Platten dadurch aufzubringen, daß sowohl die POHM-Platte als auch die PVC-Folie mit je einer Kleberschicht versehen wurden. Dabei mußte nach dem Aufspritzen des Klebers auf die PVC-Folie und auf die POHM-Platte die Verbindung beider innerhalb vorbestimmter Zeit von etwa einem Tag durchgeführt werden, da sonst der Kleber nicht mehr aktiviert werden konnte. Dies bedeutete Dispositionseinschränkungen im Verarbeitungswerk. Auch war die Gefahr nicht ausgeschlossen, daß die Zuschnitte von Folienmaterial und/oder POHM-Platten aufeinanderklebten, wenn sie gestapelt waren. Das Aufbringen der PVC-Folie auf die POHM-Platte geschah in der Weise, daß nach Erhitzen der POHM-Platte diese auf das Unterwerkzeug einer Presse gelegt wurde und die PVC-Folie mit ihrer Kleberschicht auf die Kleberschicht der POHM-Platte aufgelegt wurde, worauf das Oberwerkzeug der Presse gegen die Schichten anfuhr und eine Verbindung der PVC-Folie mit der POHM-Platte herstellte ; dabei wurde gleichzeitig auch schon eine gewünschte dreidimensionale Verformung der Schichtplatte gewonnen.

Die Aufbringung von PVC-Folien und anderem Folienmaterial auf POHM-Platten wird erschwert durch die Einschlüsse von Gas und Luft. Um diese Einschlüsse beherrschen zu können, hat man die Folien mit Mikroperforationen versehen, durch welche hindurch Dampf und Luft entweichen können. Die Anbringung von Mikroperforationnen stellt einen zusätzlichen kostenverursachenden Verarbeitungsschritt dar, ist aber darüber hinaus insbesondere deshalb nicht voll befriec'gend, weil durch die Mikroperforation das Aussehen in einer nicht immer erwünschten Weise beeinträchtigt wird, oder anders ausgedrückt, die Gestaltung des Aussehens jedenfalls eingeschränkt wird. Die bisherige Technik zur Befestigung von thermoplastischen Folien auf POHM-Platten hat sich insbesondere auch aus folgendem Grund als problematisch erwiesen :

Beim Verpressen des Folienmaterials und der Trägerplatte unter gleichzeitiger Verformung der Trägerplatte erfährt das Folienmaterial häufig eine Reckung, d.h. es werden Spannungszustände in dem Folienmaterial erzeugt und eingefroren. Wenn dieses Material später einer starken Erhitzung unterworfen wird, wie sie beispielsweise bei Karosserieauskleidungsteilen durch Sonnenstrahlung in Kauf genommen werden muß, so werden die eingefrorenen Spannungen frei und das Folienmaterial versucht in seinen früheren Zustand vor der Verpressung zurückzukehren. Dabei kann insbesondere an konkaven Oberflächenbereichen der dreidimensional verformten Platte eine Ablösung des Folienmaterials von der Trägerplatte eintreten.

All diese Probleme werden durch das erfindungsgemäße Verfahren gelöst.

Es sind Methoden und Hilfsmittel bekannt, um beim elektrostatischen Beflocken die Flockfaser sehr fest an dem beflockten Material — im vorliegenden Fall also der flexiblen Bahn — zu verankern. Die von dieser flexiblen Bahn zufolge der Wirkung des elektrostatischen Feldes im wesentlichen senkrecht abstehenden Flockfasern stellen ein — wie sich gezeigt hat — sehr wirksames Verankerungsmittel zur Verankerung in einer plattenseitigen Verankerungsmasse dar. Die Haftung wird deshalb ausgezeichnet. Ablösungserscheinungen treten nicht mehr auf. Die Verbesserung der Haftung durch die Flockschicht erlaubt es, bei der Herstellung des Verbunds zwischen der flexiblen Bahn und der Trägerplatte auf zeitraubende, umständliche, umweltfeindliche Verfahrensschritte zu verzichten, die bisher für die Herstellung einer akzeptablen Haftung unerläßlich waren. Das Problem des Luft- und Gaseinschlusses zwischen der flexiblen Bahn, insbesondere einer luftundurchlässigen Folienbahn und der Trägerplatte wird erfindungsgemäß in überraschend einfacher Weise dadurch gelöst, daß sich Luft- und Gaseinschlüsse über die Flockschicht verteilen und durch diese entweichen können.

Die Trägerplatte kann bei Anwendung des Erfindungsgedankens als Bindemittel ein Polyolefin, insbesondere Polyäthylen oder Polypropylen, enthalten und als Füllmittel insbesondere solche auf Zellulosebasis und hier wieder insbesondere Holzmehl. Mit anderen Worten, der Erfindungsvorschlag ist insbesondere bei den sogenannten POHM-Platten anwendbar, die schon in der Beschreibung des Standes der Technik erwähnt wurden.

Der Flock auf der flexiblen Bahn kann in dem Bindemittel der Trägerplatte unmittelbar verankert werden, so daß auf Haftvermittler unter Umständen ganz verzichtet werden kann und deshalb die Vereinigung von flexibler Bahn und Trägerplatte auf einfache, billige und umweltfreundliche Art durchgeführt werden kann, umweltfreundlich insbesondere wegen der Vermeidung von Lösungsmittelklebern.

Selbstverständlich ist es aber auch möglich, den Flock der flexiblen Bahn in einer besonderen Haftvermittlerschicht der Trägerplatte zu verankern. Diese Haftvermittlerschicht kann eine Polyolefinschicht sein und besteht bevorzugt aus dem gleichen Polyolefin wie das Bindemittel der Trägerplatte, so daß keine Probleme in der Verbindung zwischen der Trägermittel- und der Haftvermittlerschicht auftreten. Als Flock verwendet man bevorzugt ein Fasermaterial, das chemische Affinität zu der Haftvermittlerschicht bzw. dem Bindemittel besitzt. Als Flockmaterial steht beispielsweise ein Polypropylen-Fasermaterial zur Verfügung, das unschwer in gut haftende Verbindung mit einer Haftvermittlerschicht aus Polypropylen und/oder dem Polypropylen enthaltenden Bindemittel gebracht werden kann.

Der Erfindungsgedanke ist nicht nur anwendbar, wenn die Veredelungsschicht von einer thermoplastischen Kunststoffbahn gebildet ist, sondern ist darüber hinaus auch anwendbar, um Textilbahnen oder Vliesbahnen auf der Trägerplatte zu fixieren.

Durch die Erhitzung der Trägerplatte wird deren Bindemittel und gegebenenfalls eine von der Trägerplatte getragene Haftvermittlerschicht reaktiviert, so daß die Flockschicht in den reaktivierten Haftvermittler eindringen und sich dort verankern kann.

Bei dem Arbeitsgang des Pressens kann auch gegebenenfalls eine Prägung der flexiblen Bahn stattfinden, sofern man diese Prägung nicht schon vorher in die flexible Bahn, insbesondere thermoplastische Kunststoffbahn, eingebracht hat.

Will man bei Vereinigen der flexiblen Bahn mit der Trägerplatte gleichzeitig eine Prägung der flexiblen Bahn bewirken, so wird es unter Umständen notwendig sein, das auf die trägerplattenferne Seite der flexiblen Bahn einwirkende prägende Oberwerkzeug ebenfalls zu erhitzen.

Kritisch ist die Auswahl des Beflockungsklebers. Dieser Beflockungskleber sollte bei der Vereinigung des beflockten Bahnmaterials mit der Trägerplatte noch ausreichend flexibel sein, um so faltenlose Anschmiegung an die Trägerplatte bei deren Verformung zuzulassen. Andererseits muß dafür gesorgt werden, daß bei den Temperaturen, die bei der Vereinigung und Verformung auftreten, der Flock seine Verankerungswirkung beibehält und diese durch Nachhärten gegebenenfalls noch erhöht wird. Geeignet sind deshalb Kleber, die sich in zwei Stufen härten lassen, wobei die erste Stufe unmittelbar anschließend an die elektrostatische Beflockung und die zweite Stufe während der Vereinigung und Verformung der Schichten durchgeführt wird, immer unter Beachtung der Forderung, daß in der ersten Stufe zwar eine ausreichende Verankerung des Flocks gewährleistet werden muß, andererseits aber die für die Verformung erforderliche Schmiegsamkeit erhalten bleiben muß.

Die Menge des Flocks pro Längeneinheit und die Länge der Flockfasern, die notwendig sind, um optimalen Zusammenhalt der flexiblen Bahn und der Trägerplatte zu erzielen, lassen sich durch einfache Vorversuche von Fall zu Fall ermitteln. Eine gewisse Mindestmenge und eine gewisse Mindestlänge des Flockmaterials sind notwendig, um das Auftreten von Luft- und Gasblasen zu verhindern. Die Länge der Flockfasern sollte aus diesem Grund überwiegend mindestens 0,75 mm betragen.

Als Flock kann beispielsweise Polyamid-6,6 Schnittflock verwendet werden mit einer Länge von 0,75 mm bis 1,2 mm, vorzugsweise ca. 1 mm. Das Titer dieses Flocks beträgt dabei etwa 1,5 bis 4,5 dtex., d.h. 1,5 bis 4,5 g/1 000 m, vorzugsweise ca. 3,3 dtex. Die Flockauftragsmenge pro Quadratmeter beträgt 50 bis 120, vorzugsweise ca. 100 g/m$^2$.

Zur Beschaffenheit der flexiblen Bahnen ist noch nachzutragen, daß neben massiven Folienbahnen auch Folienbahnen aus Schaumstoff, beispielsweise Schaum-PVC-Folien, zur Anwendung kommen können.

Das erfindungsgemäße Verfahren wird bevorzugt in der Weise durchgeführt, daß die flexible Bahn von der Vorratsrolle weg oder von der Herstellungsstation weg fortlaufend in einer Durchlaufanlage mit Beflockungskleber beschichtet, beflockt und getrocknet wird. Auch die Trägerplatte kann kontinuierlich erzeugt werden.

Die beiliegenden Figuren erläutern die Erfindung. Es stellen dar:

Fig. 1 eine erfindungsgemäße Schichtplatte in Explosionsdarstellung,

Fig. 2 eine Anlage zur Herstellung einer elektrostatisch beflockten, flexiblen Bahn,

Fig. 3. eine Presse zur Vereinigung der beflockten flexiblen Bahn mit einer POHM-Trägerplatte.

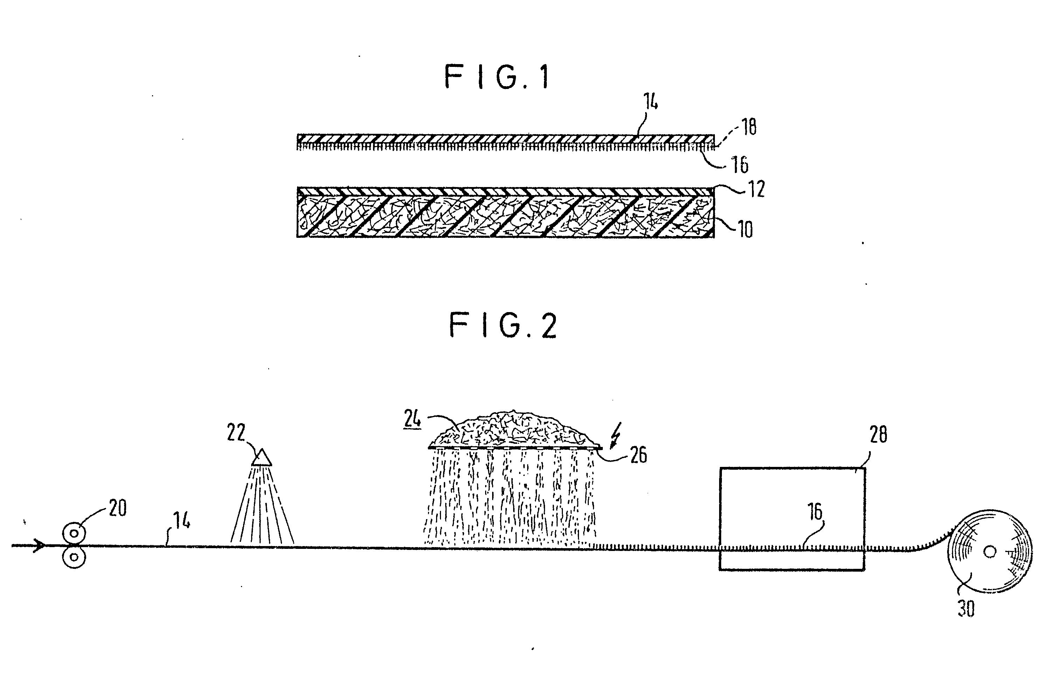

In Fig. 1 ist eine POHM-Trägerplatte mit 10 bezeichnet. Sie besteht aus 50 % Holzmehl und 50 % Polypropylen. Auf die Trägerplatte ist eine Haftvermittlerschicht 12 aus Polypropylen aufkaschiert. Eine PVC-Folienbahn 14 trägt auf ihrer Unterseite einen Polypropylenflock 16, der durch einen aushärtbaren Zweikomponentenkleber 18 an der PVC-Folienbahn 14 verankert ist. Die unteren Enden der Polypropylenflockfasern 16 sind in der Polypropylenschicht 12 verankert.

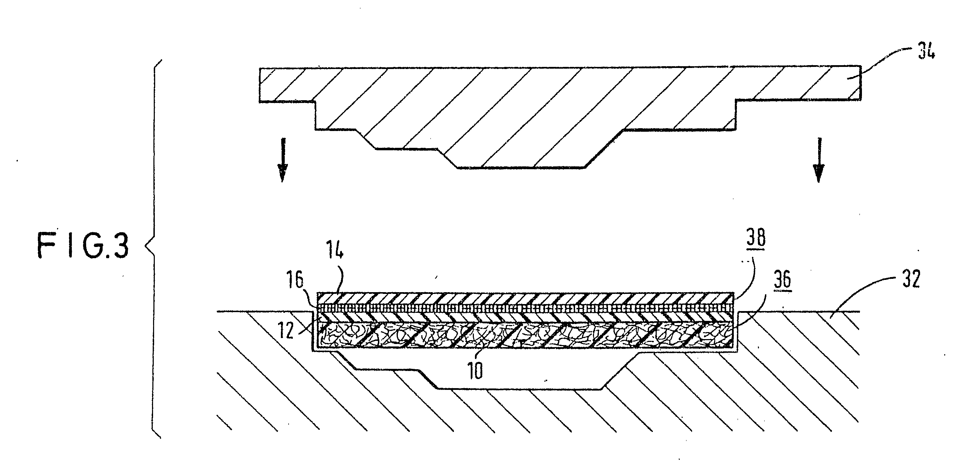

In Fig. 2 erkennt man die PVC-Folienbahn 14, welche aus einem Kalander 20 kommt. Sie durchläuft zunächst eine Kleberauftragungsstation 22, in welcher flüssiger Kleber auf die Bahn 14 aufgerakelt wird. Weiter durchläuft die Bahn 14 eine elektrostatische Beflockungsanlage 24 mit einem unter Spannung stehenden Beflockungssieb 26, durch welches Flockfasern auf die mit Kleber beschichtete Bahn 14 herabfallen. In einem Heiztunnel 28 wird der Kleber vorgetrocknet, so daß die Flockfasern als Flor- oder Flockschicht 16 auf der Bahn 14 haften. Die Bahn wird dann auf eine Rolle 30 aufgewickelt. In Fig. 3 erkennt man ein Unterwerkzeug 32 und ein Oberwerkzeug 34. In das Unterwerkzeug 32 wird ein Zuschnitt 36 einer POHM-Platte eingelegt sowie ein Zuschnitt 38 einer beflockten Folienbahn. Der Schichtaufbau beider Zuschnitte entspricht dem Schichtaufbau gemäß Fig. 1. Der Zuschnitt 36 wird vor dem Einlegen auf Verformungstemperatur erhitzt. Das Oberwerkzeug 34 kann beheizt sein, wenn die Oberseite des Zuschnitts 38 geprägt werden soll.

Beim Zusammengehen der Werkzeuge 32 und 34 werden die Flockfasern 16 in der Polypropylenschicht 12 verankert. Lufteinschlüsse zwischen den Zuschnitten 36 und 38 können durch die Flockschicht 16 entweichen.

Beispiel 1

Auf eine PVC-Folie von 0,6 mm Stärke mit einer Härte von 67 Shore A wurde ein Kleber folgender Zusammensetzung aufgetragen :

1. 50 Gew.-Teile emulgatorfreies Pasten-PVC, K-Wert 70, z.B. Vestulit P 14 21 der Firma Chem. Werke Hüls,

2. 40 Gew.-Teile Benzylphthalat,

3. 10 Gew.-Teile eines Gleitmittels auf Fettsäurebasis.

Der Auftrag erfolgte bei Raumtemperatur. Die Auftragsmenge betrug ca. 120 g, gewogen nach der Trocknung im Trockenkanal.

Auf die Kleberseite der PVC-Folie wurde sodann ein Schnittflock von Polyamid-6,6 aufgetragen. Die Faserlänge betrug 1 mm. Das Titer der Faser war 3,3 dtex. (d.h. 3,3 g/1 000 m). Die Auftragsmenge betrug 100 g/m². Der Auftrag erfolgte im elektrostatischen Feld.

Anschließend an den Auftrag wurde die PVC-Folie durch einen Trockenkanal geleitet. Die Temperatur in dem Trockenkanal betrug 170 °C. Die Verweilzeit in dem Trockenkanal war 3 bis 4 Minuten.

Ein Zuschnitt der so behandelten Folie wurde sodann in einer Presse zwischen einem Unterwerkzeug und einem Oberwerkzeug mit einer POHM-Platte vereinigt. Die POHM-Platte bestand aus 50 Gew.-Teilen Holzmehl und 50 Gew.-Teilen Polypropylen. Die POHM-Platte war auf der mit der Folie zu vereinigenden Seite mit einem Polypropylenfilm von ca. 100 μ Schichtstärke beschichtet. Die POHM-Platte wurde vor dem Einlegen in die Presse auf eine Temperatur von ca. 170 °C erhitzt und mit dieser Temperatur in die Presse eingebracht. Die beflockte PVC-Folie wurde im kalten Zustand in die Presse eingelegt, und zwar so, daß die Flockseite der Polypropylen-Beschichtung der POHM-Platte zugekehrt war. Die Werkzeuge waren vor dem Preßvorgang auf Raumtemperatur von ca. 20 °C eingestellt. Die Presse wurde hierauf geschlossen, so daß Ober- und Unterwerkzeug mit einem Druck von ca. 5 bar zusammengepreßt wurden. Ober- und Unterwerkzeug waren derart komplementär geformt, daß die Platte nach der Pressung die Gestalt einer Automobiltürverkleidung mit angeformter Armseitenstütze erhielt. Die Preßzeit betrug 35 Sekunden. Nach Beendigung dieser Preßzeit wurde das so entstandene Teil aus der Presse entnommen und bei Raumtemperatur abgekühlt. Bei einer Untersuchung des so gewonnenen Formteils ergab sich, daß die PVC-Folie ohne Lufteinschlüsse an der POHM-Platte anlag.

Das Formteil wurde sodann in einem Wärmeofen 7 Tage lang bei 90 °C getempert. Anschließend wurde die Temperatur auf 110 °C erhöht und die erhöhte Temperatur 3 Stunden lang aufrechterhalten. Es ergaben sich keine Ablösungserscheinungen, auch nicht dort, wo die PVC-Folie an konkaven Flächenbereichen der POHM-Platte anlag.

Beispiel 2

Das Beispiel 1 wurde wiederholt, jedoch wurde anstelle des in Beispiel 1 genannten Klebers ein aushärtbares, thermisch vernetzbares System mit verkapptem Isocyanat verwendet, nämlich ein elastisches, acrylatmodifiziertes, schwach verzweigtes Polyurethan. Die Ergebnisse hinsichtlich der Vermeidung von Lufteinschlüssen und der Haftung der Folie an der POHM-Platte waren vergleichbar gut, wie im Falle des Beispiels 1. Untersuchungen zeigten, daß die Vernetzung des Klebers nach dem Preßvorgang weiter fortgeschritten war als nach der Trocknung im Wärmekanal.

**Ansprüche**

1. Verfahren zur Herstellung eines Formteils, bestehend aus einem nach vorheriger Erwärmung verformten Trägerteil aus einem mit Füllmaterial versetzten thermoplastischen Bindemittel und einer aus einem flexiblen Bahnzuschnitt gebildeten Veredelungsschicht, wobei zur Herstellung der Haftung zwischen dem Trägerteil und der Veredelungsschicht eine an dem Trägerteil verankerte Faserschicht und zwischen dieser Faserschicht und dem flexiblen Bahnzuschnitt ein Kleber verwendet werden, dadurch gekennzeichnet, daß man die flexible Bahn unter Verwendung eines Flockklebers elektrostatisch beflockt, wobei der Flockkleber nur so weit erhärtet wird, daß die Verformbarkeit des flexiblen Bahnzuschnitts erhalten bleibt und daß man den so beflockten Bahnzuschnitt mit der Flockseite auf einen durch Erhitzung verformbar gemachten, den Trägerteil ergebenden Plattenzuschnitt auflegt und die beiden Zuschnitte zwischen einem Unterwerkzeug und einem Oberwerkzeug durch Pressen vereinigt und gleichzeitig räumlich verformt, wobei die Flockhöhe und Flockdichte so gewählt werden, daß beim Pressen ein Luftausgleich zwischen den Zuschnitten erfolgen kann.

2. Verfahren nach Anspruch 1, gekennzeichnet durch die Verwendung eines Plattenzuschnitts, welcher als Bindemittel ein Polyolefin, insbesondere Polyäthylen oder Polypropylen, enthält.

3. Verfahren nach Anspruch 1 oder 2, gekennzeichnet durch die Verwendung eines Plattenzuschnitts, welcher ein Füllmittel auf Zellulosebasis, insbesondere Holzmehl, enthält.

4. Verfahren nach einem der Ansprüche 1 bis 3, dadurch gekennzeichnet, daß der Flock unmittelbar in dem Bindemittel des Trägerplattenzuschnitts verankert wird.

5. Verfahren nach einem der Ansprüche 1 bis 3, dadurch gekennzeichnet, daß der Flock in einer auf dem Trägerplattenzuschnitt aufgetragenen Haftvermittlerschicht verankert wird.

6. Verfahren nach Anspruch 5, dadurch gekennzeichnet, daß der Flock in einer Polyolefinschicht auf dem Trägerplattenzuschnitt verankert wird, welche vorzugsweise aus dem gleichen Polyolefin besteht wie das Bindemittel.

7. Verfahren nach einem der Ansprüche 1 bis 6, dadurch gekennzeichnet, daß als flexibler Bahnzuschnitt ein Kunststoffbahnzuschnitt, insbesondere ein thermoplastischer Kunststoffbahnzuschnitt, z.B. ein PVC-Bahnzuschnitt, verwendet wird.

8. Verfahren nach einem der Ansprüche 1 bis 7, dadurch gekennzeichnet, daß man einen Beflockungskleber verwendet, welcher bei der Vereinigung der Zuschnitte durch von dem erhitzten Plattenzuschnitt aufgenommene Wärme nachgehärtet wird.

9. Verfahren nach einem der Ansprüche 1 bis 8, dadurch gekennzeichnet, daß man als Flock ein Fasermaterial verwendet, welches chemische Affinität zu dem als Bindemittel bzw. als Haftvermittler in der Trägerplatte verwendeten thermoplastischen Kunststoff besitzt, beispielsweise Polypropylenfaser in Fällen, in denen die Trägerplatte und/oder deren Haftvermittlerschicht aus Polypropylen besteht.

10. Verfahren nach einem der Ansprüche 1 bis 9, dadurch gekennzeichnet, daß man Flockfasern verwendet, die überwiegend mindestens 0,75 mm bis 1,2 mm, vorzugsweise ca. 1 mm, lang sind.

## Claims

1. Process for the manufacture of a moulding, consisting of a carrier part shaped after previous heating, of a thermoplastic binding agent mixed with filling material and of a finishing layer made from a flexible sheet blank, in which process a fibre layer anchored to the carrier part and, between this fibre layer and the flexible sheet blank, an adhesive, are used to provide the bonding between the carrier part and the finishing layer, characterised in that the flexible sheet is flocked electrostatically by using a flocking adhesive, the flocking adhesive being hardened only to such an extent that the shaping capacity of the flexible sheet blank is maintained, and in that the sheet blank flocked in this way is laid with the flocked side onto a panel blank which is made shapable by heating and which provides the carrier part, and the two blanks are joined, and simultaneously shaped three-dimensionally, by pressing between a lower mould and an upper mould, the flocking height and flocking density being selected so that, during pressing, an equalisation of air between the blanks can be effected.

2. Process according to Claim 1, characterised by the use of a panel blank which contains as the binding agent a polyolefine, especially polyethylene or polypropylene.

3. Process according to Claim 1 or 2, characterised by the use of a panel blank which contains a filling agent based on cellulose, especially wood meal.

4. Process according to one of Claims 1 to 3, characterised in that the flock is anchored directly in the binding agent of the carrier panel blank.

5. Process according to one of Claims 1 to 3, characterised in that the flock is anchored in a bondpromoting layer applied to the carrier panel blank.

6. Process according to Claim 5, characterised in that the flock is anchored on carrier panel blank in a polyolefine layer which preferably consists of the same polyolefine as the binding agent.

7. Process according to one of Claims 1 to 6, characterised in that a plastic sheet blank, especially a thermoplastic plastic sheet blank, for example a PVC sheet blank, is used as the flexible sheet blank.

8. Process according to one of Claims 1 to 7, characterised in that a flocking adhesive, which, when the blanks are joined, is further hardened by heat absorbed by the heated panel blank, is used.

9. Process according to one of Claims 1 to 8, characterised in that there is used as the flock a fibre material which has a chemical affinity to the thermoplastic plastic used as the binding agent or as the bond-promoter in the carrier plate, for example the polypropylene fibre in cases in which the carrier plate and/or its bond-promoting layer consists of polypropylene.

10. Process according to one of Claims 1 to 9, characterised in that flock fibres, which are predominantly at least 0.75 mm to 1.2 mm, preferably approximately 1 mm, long, are used.

## Revendications

1. Procédé de fabrication d'une pièce produite avec déplacement de matière, constituée par un élément support déformé après chauffage préalable et fait d'un liant thermoplastique auquel est mélangée une charge et par une couche de finissage formée à partir d'un flan découpé dans une bande continue flexible, une couche de fibres fixée à l'élément support et un produit adhésif entre cette couche de fibres et le flan découpé dans la bande flexible étant utilisée pour produire l'adhérence entre l'élément support et la couche de finissage, caractérisé en ce qu'on floque électrostatiquement la bande continue flexible en utilisant un adhésif pour flocs, cet adhésif étant durci seulement à un degré qui permet au flan découpé dans la bande flexible de conserver sa déformabilité, et en ce qu'on applique le flan ainsi floqué, par sa face garnie de flocs, sur un flan découpé dans une plaque, qui donne l'élément support, puis on unit les deux flans l'un à l'autre par pressage entre un outil inférieur et un outil supérieur, en modifiant simultanément leur configuration dans l'espace, la hauteur et la densité des flocs étant choisies de façon qu'un équilibrage de l'air entre les flans puisse avoir lieu lors du pressage.

2. Procédé selon la revendication 1, caractérisé par l'utilisation d'un flan découpé dans une plaque, qui comporte comme liant une polyoléfine, notamment du polyéthylène ou du polypropylène.

3. Procédé selon la revendication 1 ou la revendication 2, caractérisé par l'utilisation d'un flan découpé dans une plaque, qui comporte une charge à base de cellulose, notamment de farine de bois.

4. Procédé selon l'une quelconque des revendications 1 à 3, caractérisé en ce que les flocs sont fixés directement dans le liant du flan découpé dans une plaque.

5. Procédé selon l'une quelconque des revendications 1 à 3, caractérisé en ce que les flocs sont fixés dans une couche d'agent adhésif appliquée sur le flan découpé dans une plaque.

6. Procédé selon la revendication 5, caractérisé en ce que les flocs sont fixés dans une couche de polyoléfine sur le flan découpé dans une plaque, faite de préférence de la même polyoléfine que le liant.

7. Procédé selon l'une quelconque des revendications 1 à 6, caractérisé en ce qu'on utilise comme flan découpé dans une bande continue flexible un flan découpé dans une bande continue de matière plastique, notamment un flan découpé dans une bande continue de matière thermoplastique, par exemple un flan découpé dans une bande continue de chlorure de polyvinyle.

8. Procédé selon l'une quelconque des revendications 1 à 7, caractérisé en ce qu'on utilise comme adhésif de floquage un adhésif qui, lors de la réunion des flans, subit un durcissement ultérieur sous l'effet de la chaleur absorbée par le flan découpé dans une plaque, qui a été chauffé.

9. Procédé selon l'une quelconque des revendications 1 à 8, caractérisé en ce qu'on utilise comme flocs une matière fibreuse qui possède une affinité chimique pour la matière thermoplastique utilisée comme liant ou comme agent d'adhérence dans la plaque d'où est tiré l'élément support, par exemple des fibres de polypropylène dans les cas où cette plaque et/ou sa couche d'agent d'adhérence sont en polypropylène.

10. Procédé selon l'une quelconque des revendications 1 à 9, caractérisé en ce qu'on utilise pour les flocs des fibres qui ont pour la plupart au moins 0,75 mm à 1,2 mm et de préférence environ 1 mm de longueur.

FIG.1

FIG.2

FIG.3